# EUROPÄISCHE PATENTSCHRIFT

(11) **EP 1 791 236 B1**
(45) Veröffentlichungstag und Bekanntmachung des Hinweises auf die Patenterteilung: **04.11.2009**
(21) Anmeldenummer: 06023810.2
(22) Anmeldetag: 16.11.2006
(51) Int. Cl.: H02G 3/12

(54) **Elektroinstallationsdose**
Electrical installation box
Boîtier d'installation électrique

(30) Priorität: 23.11.2005 DE 102005056154; 16.12.2005 DE 102005060766
(43) Veröffentlichungstag der Anmeldung: 30.05.2007
(73) Patentinhaber: Günther Spelsberg GmbH & Co. KG, 58579 Schalksmühle (DE)
(72) Erfinder: Hauck, Dirk, 58553 Halver (DE); Proswitz, André, 58762 Altena (DE); Quardt, Dirk, 58638 Iserlohn (DE)
(74) Vertreter: Michalski Hüttermann & Partner Patentanwälte

(56) Entgegenhaltungen:
- WO-A-03/081054
- FR-A- 2 797 357
- US-A- 2 209 146
- US-A- 3 622 029
- US-A- 3 814 834
- US-B1- 6 369 322
- US-B1- 7 087 837

## Beschreibung

Die Erfindung betrifft eine Elektroinstallationsdose zur Installation einer elektrischen Einrichtung, wie einer Leuchte oder eines Lautsprechers, insbesondere für den Betoneinbau, mit einem Gehäuse und einer in dem Gehäuse vorgesehenen Öffnung.

Elektroinstallationsdosen der zuvor genannten Art werden häufig verwendet, um z. B. Halogenleuchten einschließlich ihrem Zubehör, wie einem Transformator und einer Anschlußschaltung, in einer Betondecke unterzubringen. Bisher ist dazu typischerweise derart vorgegangen worden, daß im Rahmen des sogenannten Doppelbetonierverfahrens fabrikmäßig hergestellte Betonfiligrandecken verwendet werden, die bereits vorgefertigte Ausnehmungen zur Installation der Leuchten aufweisen. Diese Ausnehmungen sind deutlich größer als die jeweiligen zu installierenden Leuchten und auch deutlich größer als die dafür verwendeten Elektroinstallationsdosen. Eine Elektroinstallationsdose wird daher derart in die Decke eingebracht, daß sie zuerst in der Ausnehmung befestigt wird, und zwar z. B. mit Hilfe eines Schalbretts, das die Ausnehmung nach unten hin verschließt, und daß danach der Ortbeton auf die Filigrandecke aufgebracht wird, so daß auch der nicht durch die Elektroinstallationsdose ausgefüllt Hohlraum der Ausnehmung mit Ortbeton gefüllt wird. Damit wird die Elektroinstallationsdose fest in der Betondecke integriert und ist nach Abnehmen des Schalbretts auch von unten her zugänglich, so daß die Leuchte mit ihrem Zubehör installiert werden kann.

Die schon fabrikmäßig vorgesehenen Ausnehmungen in der Filigrandecke sind deshalb typischerweise deutlich größer als die zu installierenden Leuchten bzw. die dafür verwendeten Elektroinstallationsdosen, da ein gewisser Toleranzausgleich möglich sein muß, um z. B. eine Mehrzahl von Leuchten gemäß einer vorbestimmten Ausrichtung, wie längs einer geraden Linie, anordnen zu können. Problematisch ist bei dieser Vorgehensweise nun jedoch, daß der mit dem Ortbeton ausgefüllte Bereich in der Ausnehmung von dem ihn umgebenden, fabrikmäßig hergestellten Beton der Filigrandecke optisch deutlich zu unterscheiden ist Optisch ansprechende Sichtbetondecken können auf diese Weise daher nicht hergestellt werden.

Teilweise wird wegen des erforderlichen Toleranzausgleichs auch derart vorgegangen, daß die Querschnittsfläche des Gehäusebodens der Elektroinstallationsdose deutlich größer gewählt wird als die Querschnittsfläche der zu installierenden elektrischen Einrichtung, wie der angesprochenen Halogenleuchte. In diesem Fall ist ebenfalls keine optisch ansprechende Sichtbetondecke erzielbar. Um die neben der installierten elektrischen Einrichtung sichtbaren Bereiche des Gehäusebodens zu verdecken, ist nämlich ein Verputzen oder eine ähnliche Behandlung der Decke erforderlich.

Vor diesem Hintergrund stellt sich die Aufgabe der Erfindung, eine derartige Elektroinstallationsdose bereitzustellen, die bei Betonfiligrandecken auf universelle Weise eine einfache Installation von elektrischen Einrichtungen bei gleichzeitiger Erzielung einer optisch ansprechenden Sichtbetondecke ermöglicht.

Ausgehend von der eingangs beschriebenen Elektroinstallationsdose ist diese Aufgabe dadurch gelöst, daß in der in dem Gehäuseboden vorgesehenen Öffnung ein senkrecht zum Gehäuseboden verschiebbares Anschlußbauteil vorgesehen ist.

Erfindungsgemäß ist damit folgende Vorgehensweise möglich: Die Betonfiligrandecke, auf die später der Ortbeton aufgebracht wird, wird ohne Ausnehmungen gefertigt und installiert. An den gewünschten Stellen werden dann Kernbohrungen mit einem derartigen Durchmesser durchgeführt, der etwas größer ist als der Außendurchmesser des Anschlußbauteils der erfindungs gemäßen Elektroinstallationsdose. Diese Kernbohrungen können sehr exakt durchgeführt werden, so daß vorbestimmte Orientierungen der zu installierenden elektrischen Einrichtungen zueinander ohne weiteres mit hoher Genauigkeit eingehalten werden können.

Von oben her wird dann jeweils eine erfindungsgemäße Elektroinstallationsdose in eine Kernbohrung eingesetzt. Von unten her kann danach das Anschlußbauteil in die in dem Gehäuseboden der erfindungsgemäßen Elektroinstallationsdose vorgesehene Öffnung eingeführt werden. Das heißt, daß die Elektroinstallationsdose über der Kernbohrung vorgesehen wird und ihr Anschlußbauteil in der in der Betonfiligrandecke vorgesehenen Kernbohrung angeordnet wird. Aufgrund der Längsverschiebbarkeit des Anschlußbauteils, also aufgrund dessen Verschiebbarkeit senkrecht zum Gehäuseboden, kann die effektive Länge des Anschlußbauteils an die Dicke der Betonfiligrandecke angepaßt werden. Es kann also erreicht werden, daß das Anschlußbauteil durch die Kernbohrung hindurch bis praktisch zur Unterseite der Betonfiligrandecke reicht.

Über den unteren Bereich des Anschlußbauteils kann nun die eigentliche Installation der elektrischen Einrichtung, wie der schon angesprochenen Halogenleuchte erfolgen, während Zubehör, wie ein Transformator, in dem Gehäuse der Elektroinstallationsdose vorgesehen werden kann. Im übrigen ist es auch möglich, daß das Anschlußbauteil schon die zu installierende elektrische Einrichtung, wie eine Halogenleuchte aufweist. Das heißt, daß Halogenleuchten oder andere zu installierende elektrische Einrichtungen vorgesehen sein können, die die Funktionalität des hier beschriebenen Anschlußbauteils aufweisen und somit längsverschiebbar in der im Gehäuseboden der Elektroinstallationsdose vorgesehenen Öffnung vorgesehen werden können.

Alleine dadurch, daß bei Verwendung einer separaten elektrischen Einrichtung die elektrische Einrichtung, wie eine Halogenleuchte, von ihrer Querschnittsfläche her lediglich minimal größer ist als das Anschlußbauteil und damit seitlich zumindest geringfügig über die Seitenwände des Anschlußbauteils hinausreicht, erreicht werden, daß weder von dem Anschlußbauteil noch von dem Gehäuse der Elektroinstallationsdose etwas sichtbar bleibt Ist die elektrische Einrichtung schon Bestandteil des Anschlußbauteils, so kann natürlich ebenso vorgesehen sein, daß die in das Anschlußbauteil integrierte elektrische Einrichtung, wie die schon angesprochene Halogenleuchte einen derartigen Durchmesser aufweist, der optisch zu einem entsprechenden Ergebnis führt. Damit kann eine optisch ansprechende Sichtbetondecke erzielt werden, bei der elektrische Einrichtungen, wie die schon mehrfach angesprochenen Halogenleuchten, ordnungsgemäß längs einer vorbestimmten Ausrichtung angeordnet sind.

Das Anschlußbauteil kann grundsätzlich verschiedene Formen aufweisen, die die erfindungsgenaäß vorgesehene Längsverschiebbarkeit gewährleisten. Gemäß einer bevorzugten Weiterbildung der Erfindung ist jedoch vorgesehen, daß das Anschlußbauteil rohrförmig ist. Dabei ist die Querschnittsform des rohrförmigen Anschlußbauteils praktisch beliebig, vorzugsweise ist der Querschnitt jedoch oval oder vieleckig, wie rechteckig oder quadratisch, ganz besonders bevorzugt rund.

Grundsätzlich könnte die Querschnittsfläche des Anschlußbauteils der Querschnittsfläche des Gehäusebodens entsprechen. Gemäß einer bevorzugten Weiterbildung der Erfindung ist jedoch vorgesehen, daß die Querschnittsfläche des Anschlußbauteils geringer ist als die Querschnittsfläche des Gehäusebodens.

Gemäß einer bevorzugten Weiterbildung der Erfindung ist ferner eine solche Ausgestaltung der Elektroinstallationsdose vorgesehen, daß bei Verschieben des Anschlußbauteils über einen vorbestimmten Längsbereich hinweg dessen Drehorientierung beibehalten werden kann. Das bedeutet, daß bei einer beliebigen Verschiebung des Anschlußbauteils über den vorbestimmten Längsbereich nicht zwingend eine Drehung des Anschlußbauteils erfolgen muß. In diesem Zusammenhang sei darauf hingewiesen, daß als Drehorientierung des Anschlußbauteils verstanden wird, wie das Anschlußbauteil entsprechend einer Drehung um die der Längsverschiebung entsprechenden Achse orientiert ist. Im Gegensatz dazu bezeichnet die Längsorientierung des Anschlußbauteils, wie weit das Anschlußbauteil in die eine oder andere Richtung in Längsrichtung relativ zum Gehäuseboden verschoben ist.

Gemäß einer bevorzugten Weiterbildung der Erfindung ist ferner eine solche Ausgestaltung der Elektroinstallationsdose vorgesehen, daß bei Verdrehen des Anschlußbauteils über einen vorbestimmten Drehbereich hinweg dessen Längsorientxerung beibehalten werden kann. Das bedeutet, daß das Anschlußbauteil verdreht werden kann, ohne dabei weiter aus dem Gehäuseboden herausgezogen oder in diesen hineinbewegt zu werden. Zusammengenommen mit der zuvor beschriebenen bevorzugten Weiterbildung der Erfindung bedeutet dies, daß die Längsbewegung des Anschlußbauteils einerseits und die Drehbewegung des Anschlußbauteils andererseits zumindest über einen vorbestimmten Längsbereich sowie einen vorbestimmten Drehbereich voneinander unabhängig sind.

Grundsätzlich kann das Anschlußbauteil in einer Öffnung im Gehäuseboden vorgesehen sein, die lediglich durch Heraustrennen eines dem Querschnitt des Anschlußbauteils entsprechenden Teils aus dem Gehäuseboden entspricht. Gemäß einer bevorzugten Weiterbildung der Erfindung ist jedoch vorgesehen, daß die Öffnung in dem Gehäuseboden von einer senkrecht zum Gehäuseboden verlaufenden Wandung begrenzt wird, vorzugsweise nämlich in Form eines Stutzens.

Gemäß einer bevorzugten Weiterbildung der Erfindung ist dabei ferner vorgesehen, daß die Wandung auf ihrer Innenseite wenigstens bereichsweise eine Rasterung aufweist. Als Rasterung wird dabei vorliegend eine solche Einrichtung verstanden, die aufgrund einer Wechselwirkung mit in die Rasterung eingreifenden Einrichtungen eines anderen Bauteils, wie einer korrespondierende Rasterung des anderen Bauteils, bewirkt, daß das andere Bauteil aufgrund von Kraftschluß oder Formschluß gegen Herausfallen oder Verschieben gesichert ist. Diese Sicherung wirkt bis zu einer vorbestimmten aufzuwendenden Kraft, oberhalb derer eine Relativbewegung gleichwohl wieder möglich wird, z. B. um vorliegend die gewünschte Längsverschiebbarkeit des Anschlußbauteils in der Öffnung im Gehäuseboden zu erzielen.

Grundsätzlich ist also bei Vorsehen einer Rasterung auf der Innenseite der Wandung ein Verschieben des Anschlußbauteils möglich, indem eine hinreichende Kraft aufgewandt wird. Gemäß einer bevorzugten Weiterbildung der Erfindung ist die Rasterung jedoch derart angeordnet, daß das Anschlußbauteil bei Verdrehen desselben über einen vorbestimmten Drehbereich hinaus praktisch widerstandslos entnommen werden kann. Das kann z. B. gemäß einer bevorzugten Weiterbildung der Erfindung dadurch erzielt werden, daß die Rasterung nicht über den gesamten Umfang der Innenseite der Wandung vorgesehen ist, so daß eine Drehorientierung des Anschlußbauteils erzielt werden kann, bei der es zu keiner Wechselwirkung desselben mit der Rasterung auf der Innenseite der Wandung kommt. Dabei ist es gemäß einer bevorzugten Weiterbildung der Erfindung schließlich auch vorgesehen, daß die Außenseite des Anschlußbauteils, vorzugsweise ebenfalls nur bereichsweise, mit einer mit der Rasterung auf der Innenseite der Wandung korrespondierenden Rasterung versehen ist.

Gemäß einer bevorzugten Weiterbildung der Erfindung ist schließlich vorgesehen, daß auch das Anschlußbauteil auf seiner Innenwand wenigstens bereichsweise eine Rasterung aufweist. Dies ist insbesondere vorteilhaft für den Fall, daß das Anschlußbauteil noch über keine zu installierende elektrische Einrichtung verfügt. Häufig weisen die mittels des Anschlußbauteils zu installierenden elektrischen Einrichtungen, wie die weiter oben schon angesprochenen Halogenleuchten, nämlich Federelemente auf, mit denen sie in einer Ausnehmung festgeklemmt werden können, so daß diese Federelemente mit der Rasterung auf der Innenwand des Anschlußbauteils zusammenwirken können, wodurch ein Herausfallen der Halogenleuchte aus dem Anschlußbauteil verhindert wird.

Weiterhin betrifft die vorliegende Erfindung auch die Verwendung der zuvor beschriebenen Elektroinstallationsdosen zur Installation einer elektrischen Einrichtung, wobei die Querschnittsfläche des Anschlußbauteils geringer ist als die Querschnittsfläche der installierten elektrischen Einrichtung. Auf diese Weise wird nämlich der schon weiter oben angesprochene Vorteil erzielt, daß die elektrische Einrichtung, wie die in einer Decke aus Sichtbeton installierte Halogenleuchte, das Anschlußbauteil komplett abdeckt, so daß dieses nicht mehr sichtbar ist, wodurch eine ansprechende Sichtbetondecke erzielt wird.

Gemäß einer bevorzugten Weiterbildung der Erfindung ist ferner eine derartige Verwendung einer der zuvor angesprochenen Elektroinstallationsdosen zur Installation einer elektrischen Einrichtung vorgesehen, daß die Querschnittsfläche des Gehäusebodens größer ist als die Querschnittsfläche der elektrischen Einrichtung. Auf diese Weise wird genug Platz für zu installierendes Zubehör, wie einen Transformator, bereitgestellt, wobei aufgrund der erfindungsgemäß vorgesehenen Ausgestaltung der Elelctroinstallationsdose insgesamt weiterhin eine komplette Abdeckung der Dose durch optisch ansprechenden Sichtbeton ermöglicht wird.

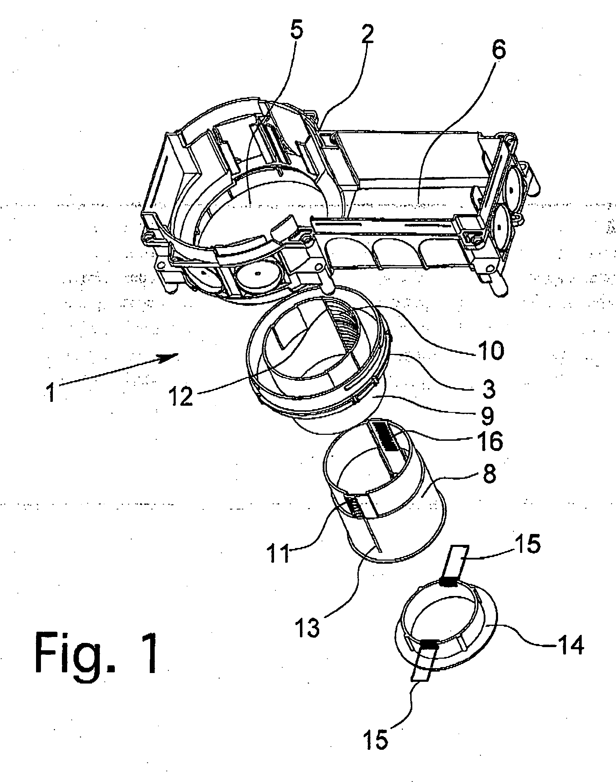

Im folgenden wird die Erfindung anhand eines bevorzugten Ausführungsbeispiels unter Bezugnahme auf die Zeichnung näher erläutert. In der Zeichnung zeigen
- Fig. 1: eine Elektroinstallationsdose zur Installation einer Halogenleuchte gemäß einem bevorzugten Ausführungsbeispiel der Erfindung in Explosionsdarstellung und

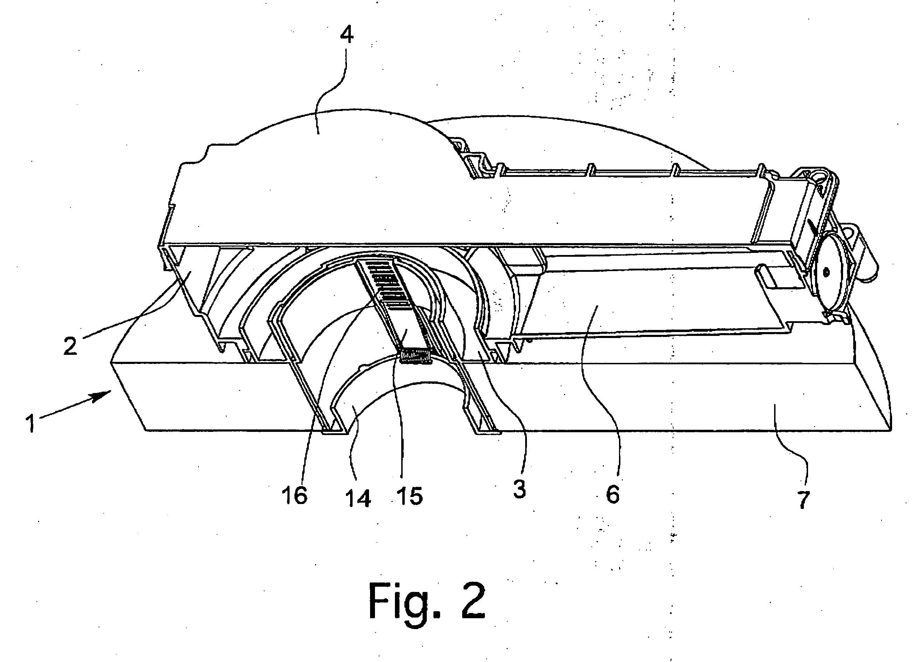

- Fig. 2: die Elektroinstallationsdose gemäß dem bevorzugten Ausführungsbeispiel der Erfindung in auf einer Betonfiligrandecke installiertem Zustand im Schnitt.

Die aus der Zeichnung ersichtliche Elektroinstallationsdose gemäß dem bevorzugten Ausführungsbeispiel der Erfindung weist ein Gehäuse 1 auf, das sich aus drei Bauteilen zusammensetzt, nämlich einem Grundgehäuse 2, einem Gehäusestutzen 3 und einem Gehäusedeckel 4. Der Gehäusestutzen 3 ist dabei derart in eine im Gehäuseboden 6 vorgesehene Öffnung 5 eingesetzt, daß die Elektroinstallationsdose von unten her zugänglich ist. Das aus dem Grundgehäuse 2, dem Gehäusestutzen 3 und dem Gehäusedeckel 4 zusammengesetzte Gehäuse 1 der Elektroinstallationsdose gemäß dem vorliegend beschriebenen bevorzugten Ausführungsbeispiel der Erfindung kann nun derart auf eine Betonfiligrandecke 7 aufgesetzt werden, daß der Gehäusestutzen 3 in eine in der Betonfiligrandecke 7 bereitgestellte Kernbohrung eingesetzt werden kann. Dabei wird vorgesehen, daß der Durchmesser der Kernbohrung im wesentlichen dem Außendurchmesser des Gehäusestutzens 3 entspricht, so daß ein Sitz des Gehäusestutzens 3 in der Kernbohrung mit nur geringem Spiel erzielt wird.

Der Gehäusestutzen 3 der Elektroinstallationsdose gemäß dem vorliegend beschriebenen bevorzugten Ausführungsbeispiel der Erfindung ist derart dimensioniert, daß er bei der Dicke typischer Betonfiligrandecken von 4,5 bis 7 cm immer nur in die Kernbohrung hineinreicht, nicht jedoch auf der anderen Seite der Kernbohrung aus der Betonfiligrandecke 7 herausragt. Um nun eine Anpassung an unterschiedliche Dicken der Betonfiligrandecke 7 zu erzielen, ist in den Gehäusestutzen 3 ein Anschlußbauteil 8 eingesetzt. Wie der Gehäusestutzen 3 weist auch das Anschlußbauteil 8 eine runde Rohrform auf, wobei Gehäusestutzen 3 und Anschlußbauteil 8 derart dimensioniert sind, daß das Anschlußbauteil 8 gerade in den Gehäusestutzen 3 hineinpaßt, so daß das Anschlußbauteil 8 in dem Gehäusestutzen 3 noch bewegt werden kann, nämlich in Längsrichtung, also hoch und runter, verschoben sowie verdreht werden kann. Damit das Anschlußbauteil 8 in dem Gehäusestutzen 3 hält, also nicht ohne weiteres aus diesem herausfällt, sind auf der Innenseite der Wandung 9 des Stutzens 3 eine Rasterung 10 und auf der Außenseite des Anschlußbauteils 8 eine Rasterung 11 vorgesehen.

Dabei erstreckt sich die Rasterung 10 auf der Innenseite der Wandung 9 des Stutzens 3 über einen Winkelbereich von ca. 90°, so daß das Anschlußbauteil 8 in dem Gehäusestutzen 3 um etwa diesen Winkelbereich gedreht werden kann, ohne aus dem Gehäusestutzen 3 herauszufallen. Um dem Verwender der Elektroinstallationsdose gemäß dem vorliegend beschriebenen bevorzugten Ausführungsbeispiel der Erfindung beim Drehen des Anschlußbauteils 8 in dem Gehäusestutzen 3 anzuzeigen, wo der zulässige Drehbereich endet, innerhalb dessen die Rasterung 10 des Gehäusestutzens 3 mit der Rasterung 11 des Anschlußbauteils zusammenwirkt und damit das Anschlußbauteil 8 in dem Gehäusestutzen 3 hält, sind Anschläge in Form einer in Längsrichtung des Gehäusestutzens 3 verlaufenden Rippe 12 auf der Innenwandung desselben und einer der Rippe 12 entsprechenden Rippe 13 auf der Außenwand des Auschlußbauteils 8 vorgesehen.

Wegen dieser Rippen 12, 13 spürt der Benutzer aufgrund eines erhöhten Drehwiderstands, daß er nun am Ende des Bereichs angekommen ist, innerhalb dessen die Rasterungen 10, 11 miteinander zusammenwirken, um das Anschlußbauteil 8 in dem Gehäusestutzen 3 zu halten. Dreht der Benutzer das Anschlußbauteil 8 über diese Stellung hinaus weiter, so besteht keine Wechselwirkung mehr zwischen den beiden Rasterungen 10, 11, so daß das Anschlußbauteil 8 ohne wesentlichen Widerstand aus dem Gehäusestutzen 3 entnommen werden kann. Dies ermöglicht damit eine einfache Möglichkeit, das Anschlußbauteil 8 in dem Gehäusestutzen 3 einzubringen und zu befestigen bzw. dann auch wieder zu entnehmen.

Dabei erfolgt die Anpassung an die jeweilige Dicke der Betonfiligrandecke 7 über das Maß, wie weit das Anschlußbauteil 8 in den Gehäusestutzen 3 eingeschoben ist. Vorzugsweise wird das Anschlußbauteil 8 so weit in den Gehäusestutzen 3 eingeschoben, daß das untere Ende des Anschlußbauteils 8 praktisch bündig mit der Unterseite der Betonfiligrandecke abschließt.

Zur Installation einer Halogenleuchte, von der in der Zeichnung nur der obere Haltering 14 mit zwei Federklemmen 15 dargestellt ist, wird der Haltering 14 mit gespannten Federklemmen 15 in das Anschlußbauteil 8 eingeführt, und dadurch, daß die Federklemmen 15 mit einer auf der Innenwand des Anschlußbauteils 8 vorgesehenen Rasterung 16 zusammenwirken, wird die Halogenleuchte in dem Anschlußbauteil 8 und damit in der Betonfiligrandecke 7 gehalten.

Insgesamt wird damit eine Möglichkeit bereitgestellt, elektrische Einrichtungen, wie Leuchten oder Lautsprecher, zueinander exakt positioniert in optisch ansprechenden Sichtbetondecken zu installieren, da von unterhalb der Decke her weder Ortbeton noch sonstige andere Materialien oder Einrichtungen sichtbar sind, die ansonsten z. B. verputzt werden müßten.

## Patentansprüche

1. Verwendung einer Elektroinstallationsdose zur Installation einer elektrischen Einrichtung, wobei die Elektroinstallationsdose ein Gehäuse (1) mit einem Gehäuseboden (6) und einer in dem Gehäuseboden (6) vorgesehen Öffnung (5) aufweist und in der Öffnung (5) ein senkrecht zum Gehäuseboden (6) verschiebbares Anschlußbauteil (8) vorgesehen ist, dessen Querschnittsfläche geringer ist als die Querschnittsfläche der elektrischen Einrichtung.

2. Verwendung nach Anspruch 1, **dadurch gekennzeichnet, daß** die Querschnittsfläche des Anschlußbauteils (8) geringer ist als die Querschnittsfläche des Gehäusebodens (6).

3. Verwendung nach Anspruch 1 oder 2, **dadurch gekennzeichnet, daß** bei Verschieben des Anschlußbauteils (8) über einen vorbestimmten Längsbereich hinweg dessen Drehorientierung beibehalten wird.

4. Verwendung nach einem der Ansprüche 1 bis 3, **dadurch gekennzeichnet, daß** bei Verdrehen des Anschlußbauteils (8) über einen vorbestimmten Drehbereich hinweg dessen Längsorientierung beibehalten wird.

5. Verwendung nach einem der Ansprüche 1 bis 4, **dadurch gekennzeichnet, daß** die Öffnung (5) in dem Gehäuseboden (6) von einer senkrecht zum Gehäuseboden (6) verlaufenden Wandung (9) begrenzt wird, vorzugsweise in Form eines Stutzens.

6. Verwendung nach Anspruch 5, **dadurch gekennzeichnet, daß** die Innenseite der Wandung (9) eine Rasterung (10) aufweist.

7. Verwendung nach Anspruch 6, **dadurch gekennzeichnet, daß** die Außenseite des Anschlußbauteils (8) eine Rasterung (11) aufweist.

8. Verwendung nach Anspruch 7, **dadurch gekennzeichnet, daß** die Rasterung (10) auf der Innenseite der Wandung (9) und die Rasterung (11) auf der Außenseite des Anschlußbauteils (8) derart ausgestaltet sind, daß das Anschlußbauteil (8) bei Verdrehen desselben über einen vorbestimmten Drehbereich hinaus widerstandslos entnommen werden kann.

9. Verwendung nach einem der Ansprüche 1 bis 8, **dadurch gekennzeichnet, daß** das Anschlußbauteil (8) auf seiner Innenwand wenigstens bereichsweise eine Rasterung (16) aufweist.

10. Verwendung nach einem der Ansprüche 1 bis 9, **dadurch gekennzeichnet, daß** die Querschnittsfläche des Gehäusebodens (6) größer ist als die Querschnittsfläche der elektrischen Einrichtung.

11. Elektroinstallationsdose zur Installation einer elektrischen Einrichtung mit einem Gehäuse (1) und einer in dem Gehäuseboden (6) vorgesehenen Öffnung (5), **dadurch gekennzeichnet, dass** in der Öffnung (5) ein senkrecht zum Gehäuseboden (6) verschiebbares Anschlussbauteil (8) vorgesehen ist, wobei die Elektroinstallationsdose mit einer elektrischen Einrichtung verbunden ist und wobei die Querschnittsfläche des Anschlussbauteils (8) geringer ist als die Querschnittsfläche der elektrischen Einrichtung.

## Claims

1. Use of an electrical installation box for installing an electrical device, wherein the electrical installation box comprises a housing (1) including a housing bottom (6) and an opening (5) formed in the housing bottom (6), and wherein in the opening (5) there is provided a connecting member (8) which is displaceable perpendicular to the housing bottom (6) and whose cross sectional area is smaller than the cross sectional area of the electrical device.

2. Use according to claim 1, **characterized in that** the cross sectional area of the connecting member (8) is smaller than the cross sectional area of the housing bottom (6).

3. Use according to claim 1 or 2, **characterized in that** during a displacement of the connecting member (8) over a predetermined longitudinal range its rotational orientation is maintained.

4. Use according to any one of claims 1 to 3, **characterized in that** during a torsional movement of the connecting member (8) over a predetermined rotational range its longitudinal orientation is maintained.

5. Use according to any one of claims 1 to 4, **characterized in that** the opening (5) in the housing bottom (6) is confined by a wall (9) extending perpendicular to the housing bottom (6), wherein the wall preferably has the form of a sleeve element.

6. Use according to claim 5, **characterized in that** the inner side of the wall (9) comprises a knurling (10).

7. Use according to claim 6, **characterized in that** the outer side of the connecting member (8) comprises a knurling (11).

8. Use according to claim 7, **characterized in that** the knurling (10) on the inner side of the wall (9) and the knurling (11) on the outer side of the connecting member (8) are configured such that the connecting member (8) can be removed without any resistance, when it is rotated beyond a predetermined rotational range.

9. Use according to any one of claims 1 to 8, **characterized in that** the connecting member (8) comprises a knurling (16) at least in certain areas on its inner wall.

10. Use according to any one of claims 1 to 9, **characterized in that** the cross sectional area of the housing bottom (6) is larger than the cross sectional area of the electrical device.

11. Electrical installation box for installing an electrical device, comprising a housing (1) which includes a housing bottom (6) and an opening (5) formed in the housing bottom (6), **characterized in that** in the opening (5) there is provided a connecting member (8) which is displaceable perpendicular to the housing bottom (6), wherein the electrical installation box is connected to an electrical device, and wherein the cross sectional area of the connecting member (8) is smaller than the cross sectional area of the electrical device.

## Revendications

1. Utilisation d'un boîtier d'installation électrique pour l'installation d'un dispositif électrique, dans laquelle le boîtier d'installation électrique comprend une enceinte (1) avec un fond d'enceinte (6) et une ouverture (5) prévue dans le fond d'enceinte (6) et il est prévu dans l'ouverture (5) un composant de raccordement (8) coulissant perpendiculairement au fond d'enceinte (6), dont la surface de la section transversale est plus petite que la surface de la section transversale du dispositif électrique.

2. Utilisation selon la revendication 1, **caractérisée en ce que** la surface de la section transversale du composant de raccordement (8) est plus petite que la surface de la section transversale du fond d'enceinte (6).

3. Utilisation selon la revendication 1 ou 2, **caractérisée en ce que**, lors du déplacement du composant de raccordement (8) sur une zone longitudinale prédéterminée, son orientation de rotation est conservée.

4. Utilisation selon l'une quelconque des revendications 1 à 3, **caractérisée en ce que**, lors d'une rotation du composant de raccordement (8) sur une zone de rotation prédéterminée, son orientation longitudinale est conservée.

5. Utilisation selon l'une quelconque des revendications 1 à 4, **caractérisée en ce que** l'ouverture (5) dans le fond d'enceinte (6) est limitée par une paroi (9) orientée perpendiculairement au fond d'enceinte (6), de préférence sous la forme d'un embout.

6. Utilisation selon la revendication 5, **caractérisée en ce que** la face intérieure de la paroi (9) présente un striage (10).

7. Utilisation selon la revendication 6, **caractérisée en ce que** la face extérieure du composant de raccordement (8) présente un striage (11).

8. Utilisation selon la revendication 7, **caractérisée en ce que** le striage (10) sur la face intérieure de la paroi (9) et le striage (11) sur la face extérieure du composant de raccordement (8) sont réalisés de telle manière que le composant de raccordement (8) puisse être enlevé sans résistance lors de la rotation de celui-ci sur une zone de rotation prédéterminée.

9. Utilisation selon l'une quelconque des revendications 1 à 8, **caractérisée en ce que** le composant de raccordement (8) présente sur sa paroi intérieure, au moins localement, un striage (16).

10. Utilisation selon l'une quelconque des revendications 1 à 9, **caractérisée en ce que** la surface de la section transversale du fond d'enceinte (6) est plus grande que la surface de la section transversale du dispositif électrique.

11. Boîtier d'installation électrique pour l'installation d'un dispositif électrique avec une enceinte (1) et une ouverture (5) prévue dans le fond d'enceinte (6), **caractérisé en ce qu'**il est prévu dans l'ouverture (5) un composant de raccordement (8) coulissant perpendiculairement au fond d'enceinte (6), dans lequel le boîtier d'installation électrique est assemblé à un dispositif électrique et dans lequel la surface de la section transversale du composant de raccordement (8) est plus petite que la surface de la section transversale du dispositif électrique.
